# EUROPEAN PATENT APPLICATION

(11) **EP 4 364 916 A1**
(43) Date of publication of application: **08.05.2024**
(21) Application number: 23205108.6
(22) Date of filing: 23.10.2023
(51) Int. Cl.: B27M 1/08, B23Q 1/00, G05B 19/18

(54) **CONTROL SYSTEM FOR A WORKPIECE MACHINING MACHINE, ASSOCIATED MACHINE, AND OPERATING METHOD OF THE MACHINE**

(30) Priority: 02.11.2022 IT 202200022488
(71) Applicant: SCM Group S.p.A., 47921 Rimini (RN) (IT)
(72) Inventor: MUCCIOLI, Gianluca, 47921 RIMINI (IT); MUCCIOLI, Federico, 47921 RIMINI (IT)
(74) Representative: Tiburzi, Andrea

(57) **Abstract**

The present invention concerns a control system for a machine for machining parts.

The present invention also concerns a system for machining parts.

The present invention finally concerns an operating method of the machine.

## Description

The present invention concerns a control system for a machine for machining workpieces.

The present invention also concerns a machine for machining workpieces.

The present invention also concerns a method of operating the machine.

### Field of invention

In more detail, the invention concerns a system of the aforementioned type, designed and created in particular to provide commands to the machine associated with one or more processes to be carried out with the machine for machining pieces such as, for example, wooden panels and the like.

In the following, the description will be addressed to a machine for machining wooden panels, in particular a machining center, but it is clear that it should not be considered limited to this specific use. The system object of the invention can in fact be applied to any type of the woodworking machine, such as a sander, an edge-bander, a panel saw, a spindle moulder, a planer, a squaring machine, a moulder, a tenoning machine, a machine for painting.

The system mentioned above according to the present invention can also be applied to machines for machining other materials such as plastic, composite materials, stone materials, glass, and metal.

### Prior art

As is known, there are devices of various types such as, for example, buttons capable of communicating with work centers, tool magazines, machines for machining workpieces, and the like to carry out operations. These buttons, which can be operated by an operator, are equipped with batteries and are connected wirelessly to the machine.

A disadvantage of these known solutions is given by the fact that the wireless connection depends on the distance of the button from the machine.

Another disadvantage of these known solutions is given by the fact that they require the presence of the operator near the machine, even for operations for which it is advisable to maintain a safety distance to safeguard the operator's safety, for example, for fixing workpieces to the work surface and/or opening and closing the machine bridge.

The buttons normally used on known machines have a direct electrical connection to the PLC. These controls generally cannot be moved except usually with inconvenient physical extension cords.

The possibility of wireless connections is an option in case it is necessary to move the controls, but it has some critical issues:
- charging the batteries, which could limit the use of the application (in fact, they must be charged periodically);
- to ensure that the controls are moved to a defined position, it would be necessary to add specific hardware that identifies the presence of a match at the point where it is desired to be sure of placing the device; and
- they may be affected by electromagnetic disturbances which compromise their functionality.

### Purpose of the invention

In light of the above, it is therefore the purpose of the present invention providing a control system for a machine for machining pieces, for example panels.

Another purpose of the invention is to provide a control device for a panel working machine that can be positioned by the operator and not necessarily electrically connected to the same machine.

Another purpose of the invention is to provide a control device that is highly reliable, relatively simple to manufacture, and at competitive costs when compared to the prior art.

It is also a purpose of the present invention to provide a system that can and perform control without time limitations derived from batteries.

Finally, the purpose of the present invention is to obtain a dislocation of the control in defined points without suffering electromagnetic disturbances.

### Object of the invention

It is, therefore, specific object of the present invention a control system for a machine of the type comprising a logic control unit, wherein said machine is intended for machining pieces, such as panels made of wood, glass, fiberglass, plastic, metal, ceramic or the like, and wherein said control system comprises: at least one control device; and at least one optical sensing reading device; characterized in that said at least one reading device can be functionally connected to said logic control unit of said machine, and in that said control device comprises at least a surface portion, on which a respective identification code of a command is reported, wherein said command identification code can be detected by said reading device and transmitted to said logic control unit.

Always according to the invention, said control device may have a prismatic shape.

Still according to the invention, said at least one control device may have a parallelepiped shape comprising six rectangular faces, wherein a respective identification code is detectable by said reading device.

Further according to the invention, said identification code may comprise an ArUco, or QR, or alphanumeric, or graphic code.

Preferably according to the invention, said at least one control device may be configured to couple to said piece machining machine by means of a coupling face, different from said at least one face bearing an identification code detectable by said reading device.

Advantageously according to the invention, said coupling face may comprise a magnetic element for coupling to a metal part of said machine.

Always according to the invention, said at least one control device may be cubic shaped.

Still according to the invention, said reading device may comprise at least one video camera.

Further according to the invention, said system may comprise at least one optical marker.

It is further object of the present invention a machine for working pieces made of wood, glass, fiberglass, plastic, metal, ceramic, or the like, comprising a working surface for supporting said pieces, means for working said pieces, wherein said working means and said pieces are movable relative to each other along at least one axis, and a logic control unit, connected to said working means, a control system, as defined above, wherein said reading device is connected to said logic control unit, wherein said reading device is capable of detecting an identification code from one of said at least one surface portion of said control device, and wherein said reading device transmits a signal associated with said identification code detected by said control logic unit for controlling said means for working said piece and handling means of said piece.

Always according to the invention, said control logic unit may be configured to compare said signal received from said reading device with data from a database corresponding to predetermined commands for said machine, said control logic unit being furthermore configured to associate said reading to a commands, and/or configured to emit or send a signal based on said comparison.

Still according to the invention, said machine may comprise an interface device configured to receive said signal from said logic control unit and/or configured to convert said signal into working commands.

It is also object of the present invention a control method for a machine for machining pieces, said control method comprising the steps of:
a) acquiring through said reading device an image of said at least one control device;
b) detecting an identification code from at least one surface portion of said at least one control device;
c) associating a command to said identification code detected by said reading device;
d) sending to said logic control unit a first signal, if said command associated with said identification code is included in a database of predetermined commands, or a second signal, if said control is not included in a database of predetermined commands.

Always according to the invention, said method may comprise the step of performing a machining of said piece based on said command if said first signal has been emitted.

Always according to the invention, said method further comprises the steps of:
e) acquiring, at regular time intervals, through said reading device, an image of said at least one control device;
f) detecting an identification code from at least one portion of the surface of said at least one control device for each image acquired at regular time intervals;
g) associating a control to said identification code detected at regular time intervals;
h) sending to said logic control unit, at regular time intervals, a first signal, if said command associated with said identification code is included in a database of predetermined commands, or a second signal, if said control it is not included in a database of predetermined commands.

Advantageously according to the invention, said method may comprise the step of associating a command to a sequence of identified identification codes.

It is also object of the present invention a computer program comprising instructions which, when the program is executed by a computer, cause the computer to execute steps b) and c) of the method according to any one of claims 13-14 or of steps f) and g) of the method defined above.

It is, finally, object of the present invention a computer-readable storage medium comprising instructions which, when executed by a computer, cause the computer to execute steps b) and c) or to execute by the computer of steps f) and g) of the method defined above.

### Brief description of the figures

The present invention will be now described, for illustrative but not limitative purposes, according to its preferred embodiments, with particular reference to the figures of the enclosed drawings, wherein:
figure 1 shows, in perspective view, an embodiment of a control system for a machine for machining workpieces, according to the present invention;
figure 2 shows a perspective view of a control device for the machining of workpieces, object of the present invention; and
figure 3 shows a schematic view of the machine shown in figure 1 comprising a plurality of control devices.

### Detailed description

In the various figures the similar parts will be indicated with the same numerical references.

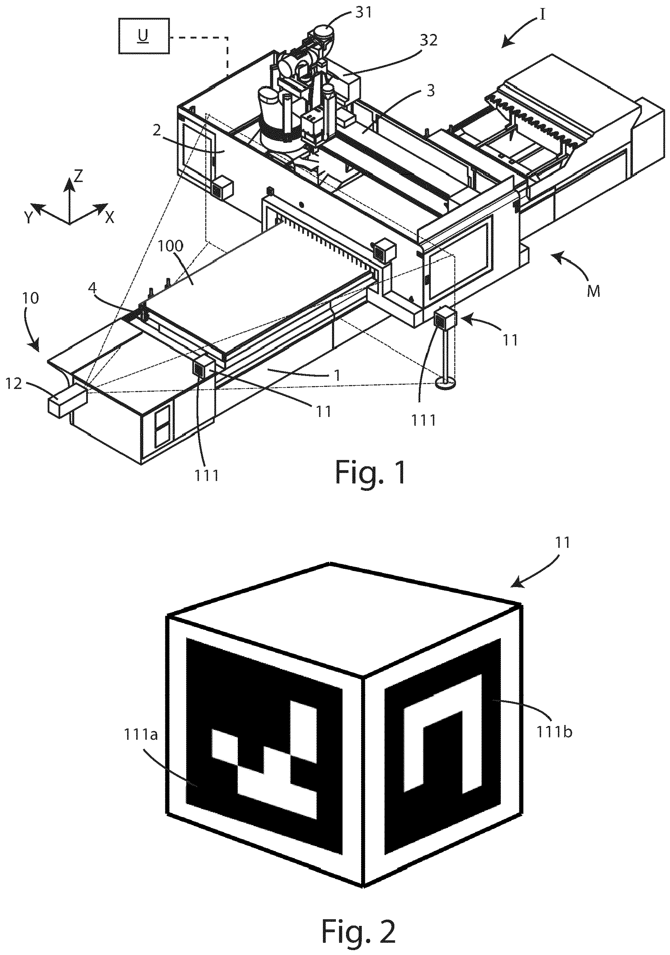

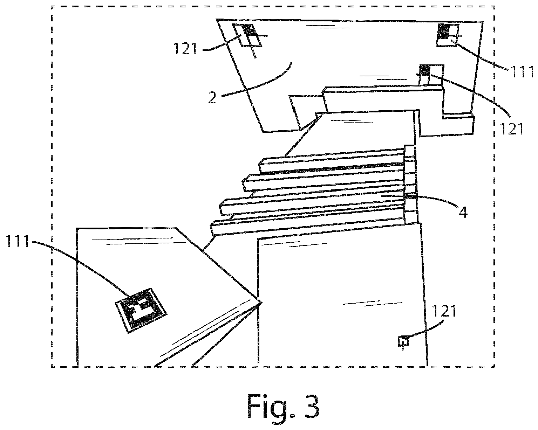

Referring to figures 1 and 3, a system I is shown comprising a machine M for machining pieces 100 and a control system 10 of said machine M, object of the present invention.

Said machine M comprises a base 1, which develops along a first horizontal axis. The machine M comprises a casing 2, which extends along a Y axis and is arranged substantially orthogonal to said base, above which a working surface 4 is arranged, to support the pieces 100 to be machined.

Said working surface 4 is also called "multifunction surface", i.e. a continuous surface equipped with holes connected to a vacuum source not shown in the figure), which through the insertion of appropriate gaskets inside grooves obtained in the working surface 4 itself, allows, in a known way, the fixing of the pieces 100 to be machined.

In a further embodiment not shown in the figures, the working surface 4 can comprise a plurality of bars, generally arranged in parallel, slidably coupled to the base along the X axis. Each bar in turn comprises a plurality of blocking means, for example vacuum suction cups, and/or clamps, to allow, in a known way, the locking of the piece during machining.

Said machine M also comprises a crossbeam 3, movable along the X axis and arranged transversely with respect to the advancement direction of the workpieces (100) to be machined, or in relation to said X axis.

Alternatively or in addition to the possibility of movement of the crossbeam 3 along the X axis, moving means (for example, a conveyor belt) can be provided in the machine M to move said one or more panels or other pieces along said X axis.

In general terms, in the machine M movement means are provided to achieve a relative movement along the first X axis between said pieces 100 and the crossbeam 3.

A machining unit 31 is slidably movable on said crossbeam 3, on which in the present embodiment a machining head 32 is installed. Said machining head 32 is capable of machining a piece 100 using appropriate tools (not shown in the figures),, such as a cutter, a disc blade, a drill bit, etc.

The machine M can perform different workings on the pieces 100, depending on the type of tool mounted and also according to the degrees of freedom of said machining head, which can be two or three axes of linear movement, respectively along the Y axis, and a Z axis, orthogonal to said X axis and Y axis, and one, two, three, or more rotational axes.

Figure 1 shows a machine M of the machining center type, while other embodiments not shown in the figure also comprise, for example, a cutting machine, in which, in a known manner, the piece 100 is held still by a pressure beam (not shown in the figures) on the working surface 4, and the cut is carried out by a cutting unit that translates along a cutting line.

Furthermore, said machine M can possibly be a pass-through machine, i.e. a machine in which the piece to be worked moves along one direction and the machining unit 31 can be mobile, as anticipated, on one or more axes, such as for example a drilling machine, a sander, an edge-bander, a moulder, a painting machine, a pressing machine or a square-edge-bander.

Without departing from the scope of protection, said machine M can also consist of a woodworking machine, such as for example a circular saw or a spindle moulder.

Still referring again to figure 1, said machine M comprises at least one control system 10, which comprises at least one control device 11 and a reading device 12. The control device 11 is coupled to said machine M.

Referring again to figure 1, it is observed that the control system 10 comprises at least one control device 11 coupled to said base 1.

Said control device 11 is prismatic in shape, preferably parallelepiped in shape, and comprises at least one face 111 configured to be read or detected optically.

Said at least one control device 11 of parallelepiped shape comprises six rectangular faces, each of said six faces having a side A and a side B, preferably the sides A and B of equal dimensions.

Said at least one control device 11 can be configured to define a command and can include an identification code 111a in at least one 111 of said six faces, said identification code configured to be read by a reading device 12, for example by optical detection. The identification code 111a is preferably a QR code or an ArUco code. In some embodiments of the present invention the identification code 111a may be an alphanumeric or graphic code.

Said at least one control device 11 can be configured to couple to said machine M for machining pieces 100 through at least one of said six faces.

One face of said control device 11 can comprise a magnetic element, for example, glued to said face. Therefore, said control device 11 can be coupled, for example, to a metal part of the machine M through a magnetic coupling.

In other embodiments, an interlocking coupling can also be provided.

Referring again to figure 1, the control system 10 comprises four cubic-shaped control devices. Each of the said four control devices comprises a face 111 comprising an identification code 111a.

Said at least one control device 11 may be capable of defining a command based on one or more readings of said control device 11 by said reading device 12 and to send signals and data to a logic control unit U, which can be associated with the reading device 12.

Said logic unit U can be configured to receive a reading of a face 111 of the control device 11, to compare said reading with data corresponding to predetermined commands for said machine M, to associate said reading with a command and/or to issue or send a signal based on said comparison.

Said reading can be compared with data present in a database and accessible from said logic unit U. Said predetermined commands can comprise, for example, defining the type of piece 100 to be machined, defining a positioning of said piece 100 on the machining unit 3, define an orientation of said piece 100, or define a machining of said piece 100.

Furthermore, said predetermined commands can be related, for example, to one or more of the following functions or components of the machine M (the following list of functions is illustrative, but not exhaustive):
- movement between an operating position and a rest position of reference stops for positioning the piece. Said reference stops are positioned in the working area of the machine M and are movable vertically between a rest position, in which they are arranged below, or at the same level as the working surface 4 in the vertical direction, and a work position, in which they project with respect to the working surface 4 to correctly position the piece to be worked on the working surface 4 itself;
- positioning of lifting means on the working surface 4. Said lifting means are mobile (in translation and/or rotation) between a rest position, in which they lie below the working surface 4, so as not to interfere with the piece, and a working position, in which they are arranged above the working surface 4, to raise and support the piece with respect to the working surface 4, so as to facilitate loading/unloading of the same by the operator;
- activation or deactivation of workpiece blocking means. These means can be, for example, vacuum suction cups, in which the vacuum is activated, or clamps in which the jaws are moved until they grip the piece, so as to keep the piece in position during machining;
- activation or deactivation of auxiliary devices. These auxiliary means can be, for example, lights for illuminating the working area, pumps for supplying vacuum to the machine components that require it, etc.;
- movement of tool magazines. This involves, for example, the activation of rotation in the case of using circular rotary magazines, or the activation of step-by-step rotation in the case of using polygonal-shaped magazines, or the activation of the tool handling system in the case of using magazines motorized chain;
- positioning of the bars and/or locking means in a predetermined configuration depending on the machining to be carried out and the dimensions of the piece to be worked, in the case of an automatic working surface 4, equipped with bars and/or motorized locking means;
- positioning of the crossbeam 3 and/or of the machining head 31 in a rest position and/or in a working position. In fact, in case of need for operations in a certain portion of the working surface by the operator, for example, loading or unloading of pieces, maintenance, adjustment of piece blocking means, etc..., the crossbeam 3 and/or the machining head 31 can be moved to an area of the work surface at a suitable distance from the portion affected by the operations. This area can be, for example, a terminal area of the table itself, and the crossbeam or machining head positioned in this area corresponds to the rest position, and vice versa;
- change in the control and/or operating mode of the machine. For example, the way in which the machine receives machining instructions can be changed, for example through manual control by the operator, or automatic control by the machine's logic unit, through a remote control device, or through a fixed control panel.

The above list of commands relates to the specific machine M described, i.e. a work center, but it is clear that if the type of machine is different, such as a sander, an edge-bander, a panel saw, a moulder, a planer, a squaring machine, a moulder, a tenoning machine, a painting machine, etc., the controls can be different and specific, in a known way, for the type of machine, without departing from the scope of protection of the present invention. Still referring to figure 1, a first control device 11 is coupled to said base 1, for example, by means of a magnetic coupling. A second and a third control device are coupled respectively to a first and a second point of the casing 2, for example, by magnetic coupling; a fourth control device 11 is located near the machine M.

In some examples of the present invention, said at least one control device 11 can be positioned on a portion of said casing 2 or in proximity to the machine M, for example at a distance ranging from 1 to 3 meters from said base 1 along the substantially horizontal X direction, between 1 and 3 meters from said base 1 along the substantially Y direction, and at a height along the Z axis, equal to or elevated compared to the base 1, for example, between 0 and 1 meter from the height of the base 1.

In general terms, the positioning of the control devices 11 does not however have prior definable limits. It is important that they are in the pickup zone of the reading device 12 and can be detected with sufficient definition to read the code.

In particular, said control system 10 includes a reading device 12 coupled to said base 1 or close to said machine M.

Said reading device 12 may be able to detect an identification code 111a of said at least one control device 11 and send the detected data to said logic control unit U.

The reading device 12 can be, for example, a camera positioned near the said machine M, in such a way as to frame the said base 1 and a working surface located between said base 1 and said casing 2 of the said machine M. In some exemplary embodiments of the present invention, the said camera is positioned at a distance, for example, along the substantially horizontal X axis, ranging from 0 to 5 meters (although the distances can vary significantly depending on the performance of the reading devices 12 used) from the base 1 of the machine M.

Again by way of example, in some embodiments of the present invention, the camera of the reading device 12 is arranged at a height along the Z axis equal to or higher than the base 1, for example, between 0 and 1 meter from the height of the base 1.

Said reading device can also include, for example, MEMS technology inclinometers - Micro-Electro-Mechanical Systems - with rotation detection with respect to one, two or three measurement axes, for example capacitive and/or accelerometer sensors and/or or gyroscopic.

In some examples of the system 10 of the present invention, the reading device 12 can include one or more cameras arranged in such a way as to frame said at least one control device 11, said base 1 and said casing 2 of the machine M.

Said machine M can also be provided with at least one interface device, not present in the figure, not shown in the figure, capable of communicating with said logic control unit U.

The operation of the machine M for machining pieces 100 comprising a control system 10 described above is as follows.

When said machine M is in operation, said reading device 12 detects at least one face 111 of said at least one control device 11, positioned for example, on an upper portion of the base 1 or in the vicinity of the machine M.

Said control system 10 can detect, for example, an identification code 111a of said readable face 111 of said control device 11.

Said control system 10 can then send to said logic control unit U said identification code 111a corresponding to a command, said identification code 111a detected by said at least one control device.

Said control logic unit U compares the detected reading, for example, the identification code 111a detected by said reading device 12 with a database of predetermined reference commands of said machine M.

In the event that said reading, for example of said detected identification code 111a, corresponds to one of said predetermined reference commands of said machine M, said logic control unit U transmits a first signal S to said at least one interface device.

Said first signal S can be used, for example, to indicate to an operator that said machine M is in optimal working conditions or to control the handling and machining means.

If, however, the reading, for example, of the detected identification code, is not identifiable with any of said predetermined reference commands, said logic control unit U transmits a second signal S' to said at least one interface device.

Said second signal S' can be used, for example, to indicate to an operator that said machine M is not in optimal reading conditions and that an intervention is necessary to modify, for example, the positioning of said reading device 12 or at least one of said control devices 11.

Said at least one interface device can be, for example, a personal computer integrated into the machine M, a portable control panel of the machine M, a tablet, a smartphone or a device wearable by an operator, such as for example a bracelet or a necklace.

Without departing from the scope of protection of the present invention, if, for example, the signal is visual, it is possible to display a green light on said interface, in correspondence with said first signal S, while it is possible to display a red light on said interface, in correspondence with said second signal S'.

It is also possible to set said control system 10 so that said reading device 12 carries out a reading of a sequence of faces of said at least one control device 11 and sends corresponding signals to said logic control unit U, to define a sequence of operations to be carried out on said piece 100.

Referring to figure 2, the control device 11, the object of the present invention, is a cube that comprises four lateral faces (only two of said four lateral faces visible in figure 2), each of said faces comprising an ArUco identification code (identified in figure 2 as a first identification code 111a of a first lateral face, i.e. of a portion of the surface in general, for example on the left, and a second identification code 111b of a second lateral face, for example on the right in the figure). The remaining two faces, also said upper base and lower base (said lower base not visible in figure 2), parallel to each other, do not include an identification code. Said lower base can comprise a magnetic component configured to couple with a metal surface, for example with an upper portion of said base 1.

Referring to figure 3, the control system 10 can comprise the use of optical markers 121 in proximity to said at least one control device 11.

Said optical markers 121, in the presence of multiple control devices 11, can favor the recognition and use of a specific control device 11. The presence of said optical markers 121 favors the use of said reading device 12 configured to frame particular areas of the machine dedicated to being coupled with said multiple control devices 11. In fact, through said optical markers 121 it is possible to define sensitive areas for button use.

Therefore, it is possible to couple multiple control devices 11 to the machine M and activate the detection of a specific control device 11 of interest by means of the recognition or detection of said optical markers 121 in proximity to said specific control device 11 of interest.

Furthermore, through dedicated algorithms for detecting said optical markers 121, it is possible to activate (*triggering*) a switching event on said sensitive areas and by means of an interface device convert the reading of said identification code 111a into processing commands (for example, PLC signals).

Said optical markers 121 can be common adhesives or include a magnetic element to facilitate, for example, coupling with a metal part of the machine M.

### Advantages

A first advantage of the present invention is the possibility of having a machine M whose work programming is simple to define.

A further advantage of the present invention is the possibility of providing a control system 10 for a machine M configured to significantly reduce the use of cables and additional components such as buttons, pedals or the like. This configuration avoids the clutter caused by an excessive number of cables. Furthermore, the time for the design of additional components and placement of said cables is reduced.

A further advantage is being able to place said at least one control device 11 in at least one ergonomic position.

A further advantage of the present invention is the possibility of detecting said identification code 111a corresponding to a working command independently of the tools available to the operator and/or the distance from the operator to said machine M.

Another advantage of the invention is the possibility of having a control system 10 configured to detect and/or define work commands of said machine M in a sequential manner, reducing the presence of the operator near the machine M itself, for example in operation steps at high risk for the operator.

Furthermore, by means of said control system 10, it is possible to monitor anti-intrusion functions in critical areas for the operator and compare them with predetermined functions collected in a data archive.

A further advantage of the present invention, in the presence of multiple control devices 11, is the possibility of detecting said identification code 111a of a single control device 11 of interest, in the presence of a trigger signal provided by the detection of said optical markers 121, for example, in the vicinity of the control device 11 of interest.

A further advantage of the present invention is given by the presence of optical markers 121, which allow the positioning of at least one control device 11 in an ergonomic manner.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Control system (10) for a machine (M) of the type comprising a logic control unit (U), wherein said machine (M) is intended for machining pieces (100), such as panels made of wood, glass, fiberglass, plastic, metal, ceramic or the like, and wherein said control system (10) comprises:
at least one control device (11); and
at least one optical sensing reading device (12);
**characterized**
**in that** said at least one reading device (12) can be functionally connected to said logic control unit of said machine (M), and
**in that** said control device (11) comprises at least a surface portion (111), on which a respective identification code (111a) of a command is reported, wherein said command identification code (111a) can be detected by said reading device (12) and transmitted to said logic control unit (U).

2. System (10) according to the preceding claim, wherein said control device (11) has a prismatic shape.

3. System (10) according to the preceding claim, **characterized in that** said at least one control device (11) has a parallelepiped shape comprising six rectangular faces, wherein a respective identification code (111a) is detectable by said reading device (12).

4. System (10) according to the preceding claim, wherein said identification code (111a) comprises an ArUco, or QR, or alphanumeric, or graphic code.

5. System (10) according to any one of the preceding claims, wherein said at least one control device (11) is configured to couple to said piece (100) machining machine (M) by means of a coupling face, different from said at least one face (111) bearing an identification code (111a) detectable by said reading device (12).

6. System (10) according to the preceding claim, wherein said coupling face comprises a magnetic element for coupling to a metal part of said machine (M).

7. System (10) according to any one of the preceding claims, wherein said at least one control device (11) is cubic shaped.

8. System (10) according to any one of the preceding claims, wherein said reading device (12) comprises at least one video camera.

9. System (10) according to any one of the preceding claims, comprising at least one optical marker (121).

10. Machine (M) for working pieces (100) made of wood, glass, fiberglass, plastic, metal, ceramic, or the like, comprising
a working surface (4) for supporting said pieces (100), means for working (32) said pieces (100), wherein said working means (32) and said pieces (100) are movable relative to each other along at least one axis (X), and
a logic control unit (U), connected to said working means (32),
a control system (10), according to any one of claims 1-9,
wherein said reading device (12) is connected to said logic control unit (U),
wherein said reading device (12) is capable of detecting an identification code (111a) from one of said at least one surface portion (111) of said control device (11), and
wherein said reading device (12) transmits a signal associated with said identification code (111a) detected by said control logic unit (U) for controlling said means for working said piece (100) and handling means of said piece (100).

11. Machine (M) according to the preceding claim, wherein said control logic unit (U) is configured to compare said signal received from said reading device (12) with data from a database corresponding to predetermined commands for said machine (M), said control logic unit (U) being furthermore configured to associate said reading to a commands, and/or configured to emit or send a signal based on said comparison.

12. Machine (M) according to any one of claims 10 or 11, wherein said machine (M) comprises an interface device configured to receive said signal from said logic control unit (U) and/or configured to convert said signal into working commands.

13. Control method for a machine (M) for machining pieces (100) according to any one of claims 10-12, said control method comprising the steps of:
a) acquiring through said reading device (12) an image of said at least one control device (11);
b) detecting an identification code (111a) from at least one surface portion (111) of said at least one control device (11);
c) associating a command to said identification code (111a) detected by said reading device (12);
d) sending to said logic control unit (U) a first signal, if said command associated with said identification code (111a) is included in a database of predetermined commands, or a second signal, if said control is not included in a database of predetermined commands.

14. Method according to the preceding claim, which comprises the step of performing a machining of said piece (100) based on said command if said first signal has been emitted.

15. Method according to any one of claims 13 or 14, further comprising the steps of:
e) acquiring, at regular time intervals, through said reading device (12), an image of said at least one control device (11);
f) detecting an identification code (111a) from at least one portion of the surface (111) of said at least one control device (11) for each image acquired at regular time intervals;
g) associating a control to said identification code (111a) detected at regular time intervals;
h) sending to said logic control unit (U), at regular time intervals, a first signal, if said command associated with said identification code (111a) is included in a database of predetermined commands, or a second signal, if said control it is not included in a database of predetermined commands.

16. Method according to the preceding claim, which comprises the step of associating a command to a sequence of identified identification codes.

17. Computer program comprising instructions which, when the program is executed by a computer, cause the computer to execute steps b) and c) of the method according to any one of claims 13-14 or of steps f) and g) of the method according to any one of claims 15-16.

18. A computer-readable storage medium comprising instructions which, when executed by a computer, cause the computer to execute steps b) and c) of the method according to any one of claims 13-14 or to execute by the computer of steps f) and g) of the method according to any one of claims 15-16.
